Europäisches Patentamt

European Patent Office

Office européen des brevets

(11) Numéro de publication: **0 266 831 B1**

## (12) FASCICULE DE BREVET EUROPEEN

(45) Date de publication de fascicule du brevet: **29.07.92**    (51) Int. Cl.⁵: **C01D  7/22**, B01D 12/00

(21) Numéro de dépôt: **87202054.0**

(22) Date de dépôt: **27.10.87**

(54) **Procédé pour séparer des grains de bicarbonate de métal alcalin, d'une pellicule liquide de chlorhydrate d'une base organique azotée adsorbée à leur surface et procédé pour la production de bicarbonate de métal alcalin.**

(30) Priorité: **05.11.86 FR 8615527**

(43) Date de publication de la demande:
**11.05.88 Bulletin  88/19**

(45) Mention de la délivrance du brevet:
**29.07.92 Bulletin  92/31**

(84) Etats contractants désignés:
**AT BE CH DE ES FR GB GR IT LI LU NL SE**

(56) Documents cités:
**DE-C- 970 866
US-A- 3 443 889**

**CHEMICAL ABSTRACTS, vol. 99, no. 16, 17 octobre 1983, page 134, no. 124927w, Columbus, Ohio, US; W. YANG et al.: "A new technology for the manufacture of soda ash by extraction", & SHANXI DAXUE XUEBAO, ZIRAN KEXUEBAN 1982, 17, 46-9**

(73) Titulaire: **SOLVAY
Rue du Prince Albert, 33
B-1050 Bruxelles(BE)**

(72) Inventeur: **Ninane, Léon
Rue Laennec, 1
F-54110 Dombasle-sur-Meurthe(FR)**
Inventeur: **Breton, Claude
Rue Pierre Breton, 5
F-54110 Dombasle-sur-Meurthe(FR)**

(74) Mandataire: **Anthoine, Paul et al
SOLVAY Département de la Propriété Industrielle 310, rue de Ransbeek
B-1120 Bruxelles(BE)**

Rank Xerox (UK) Business Services

## Description

La présente invention est relative à un procédé pour séparer des grains de bicarbonate de métal alcalin, d'une pellicule liquide de chlorhydrate d'une base organique azotée qui les imprègne.

On connaît une technique pour la fabrication de bicarbonate de sodium selon laquelle on mélange une solution aqueuse de chlorure de sodium et une solution organique d'une amine insoluble dans l'eau on traite le mélange résultant avec un gaz contenant de l'anhydride carbonique, puis le soumet à une décantation pour séparer une suspension aqueuse de bicarbonate de sodium et une solution organique de chlorhydrate d'amine. La suspension aqueuse est ensuite soumise à une décantation ou une filtration pour en extraire le bicarbonate de sodium solide qu'elle contient et la solution organique est traitée pour régénérer l'amine que l'on recycle dans le procédé (brevet GB-A-1082436 (KAISER ALUMINUM & CHEMICAL CORPORATION), page 2, lignes 105 à 125; Central Patents Index, Basic Abstracts Journal, Section E, Week T.49, Derwent Publication Ltd., Londres, abrégé 78430T-E : demande de brevet JP-A-7241237 (Israël Mining Inds. Inst. Res. & Dev.)).

Le bicarbonate de sodium recueilli à l'issue de ce procédé connu se présente généralement à l'état de grains qui sont imprégnés d'une pellicule d'adsorption de la solution organique de chlorhydrate d'amine. La présence de cette pellicule constitue un désavantage, car elle nuit à la qualité du bicarbonate de sodium et entraîne une perte en amine.

L'invention remédie à ce désavantage en fournissant un procédé qui permet de récupérer de manière efficace et économique du chlorhydrate d'une base organique azotée, notamment du chlorhydrate d'amine, adsorbé sur des grains de bicarbonate de métal alcalin et qui permet de produire, par la même occasion, du bicarbonate de métal alcalin de qualité améliorée.

En conséquence, l'invention concerne un procédé pour séparer des grains de bicarbonate de métal alcalin, d'une pellicule liquide de chlorhydrate d'une base organique azotée, adsorbée à leur surface; selon l'invention on disperse les grains dans un bain aqueux et on soumet la suspension aqueuse résultante successivement à une turbulence puis à une décantation.

Dans le procédé selon l'invention, la base organique azotée est, par définition, tout réactif organique azoté insoluble dans l'eau, qui présente un caractère basique suffisant pour réagir avec le chlorure d'hydrogène en formant du chlorhydrate de la base. Le liquide peut être constitué par le chlorhydrate de la base organique azotée tel quel, lorsque celui-ci est normalement liquide dans les conditions d'exécution du procédé. En variante, il peut être une solution du chlorhydrate dans un solvant approprié, de préférence un solvant organique. En règle générale, il est avantageux de sélectionner la nature et la quantité du solvant de manière que le liquide présente une viscosité qui n'excède pas $3.10^{-3}$ Pa.s (3 centipoises), de préférence $1,5.10^{-3}$ Pa.s (1,5 centipoise) dans les conditions d'exécution du procédé. Des exemples de solvants organiques utilisables dans le cadre de l'invention sont le xylène, les butylbenzènes, les méthyléthylbenzènes et plus spécialement le white spirit et les solvants du commerce connus sous les marques ISOPAR (Esso) qui est un mélange d'isoparaffines, SOLVESSO (Esso) qui est un mélange de composés aromatiques, SHELLSOL AB (Shell) qui est un mélange de composés aromatiques et SHELLSOL K qui est un mélange de composés aliphatiques.

La pellicule liquide est une couche mince, continue ou discontinue, de liquide, adsorbée sur les grains.

Selon l'invention, les grains imprégnés de la pellicule liquide de chlorhydrate d'une base organique azotée sont dispersés dans un bain aqueux et la suspension aqueuse ainsi obtenue est soumise à une turbulence puis à une décantation.

Le bain aqueux peut être de l'eau ou une solution aqueuse. Dans le cas d'une solution aqueuse, celle-ci doit de préférence être inerte chimiquement vis-à-vis du bicarbonate de métal alcalin dans les conditions de travail. Elle peut par exemple être une solution aqueuse de chlorure de métal alcalin. On préfère utiliser une solution aqueuse de bicarbonate de métal alcalin, de préférence une solution saturée.

Le bain aqueux doit être mis en oeuvre en quantité suffisante pour permettre une dispersion aisée et efficace des grains de bicarbonate de métal alcalin, en évitant la formation d'agglomérats. Il convient néanmoins d'éviter une quantité excessive de bain, qui occasionnerait un encombrement excessif et nécessiterait une dépense excessive d'énergie à l'étape ultérieure de mise en turbulence. La quantité optimum de bain à mettre en oeuvre dépend en fait de divers paramètres, parmi lesquels figurent la nature du bain et la distribution granulométrique du bicarbonate de métal alcalin; elle peut être déterminée aisément dans chaque cas particulier par un travail de routine au laboratoire.

La turbulence a pour fonction de détacher la pellicule liquide des grains de bicarbonate et de la disperser dans le bain aqueux. Elle peut être exercée par tous moyens adéquats par exemple un agitateur rotatif ou une injection de gaz. L'intensité et la durée de la turbulence doivent être suffisantes pour détacher la pellicule liquide des grains et elles dépendent de divers paramètres, notamment du diamètre moyen des

2

EP 0 266 831 B1

grains, de la nature du liquide de la pellicule, de la nature du bain aqueux, des masses respectives des grains de bicarbonate de métal alcalin et du bain, ainsi que de la température. Elles peuvent être déterminées aisément dans chaque cas particulier par un travail de routine au laboratoire.

La décantation qui suit la turbulence a pour fonction de séparer les grains de bicarbonate de métal alcalin, d'une phase liquide contenant le chlorhydrate. Elle peut être exécutée par gravité ou par centrifugation. A l'issue de la décantation, on évacue ladite phase liquide et on recueille les grains de bicarbonate de métal alcalin.

Pour des considérations de nature économique, le procédé selon l'invention est avantageusement exécuté à basse température, de préférence sous 60°C, par exemple entre 15 et 40°C.

Le bicarbonate de métal alcalin recueilli à l'issue de la décantation est humide; on peut éventuellement le soumettre à une opération ultérieure de séchage.

Dans une forme de réalisation particulière du procédé selon l'invention, les grains de bicarbonate humides, recueillis à l'issue de la décantation sont dispersés dans un autre bain aqueux et la dispersion résultante est soumise successivement à une turbulence et à une décantation comme décrit plus haut. Cette forme de réalisation particulière de l'invention, qui peut être répétée à plusieurs reprises, augmente l'efficacité du procédé.

Le procédé selon l'invention s'applique à toutes les bases organiques azotées telles que définies plus haut, et spécialement à celles qui sont insolubles dans l'eau, par exemple aux imines insolubles dans l'eau et leurs dérivés, aux sels d'ammonium quaternaire insolubles dans l'eau et aux amines et dérivés aminés insolubles dans l'eau; il s'applique spécialement bien aux amines primaires, notamment aux alkylamines primaires comprenant de 12 à 24 atomes de carbone dans la molécule, qui trouvent une utilisation intéressante dans la production de bicarbonate de sodium par la technique aux amines décrite plus haut. Par ailleurs, le procédé selon l'invention s'applique aussi avec efficacité au cas où la pellicule liquide des grains de bicarbonate comprend un mélange de la base organique azotée et de chlorhydrate de ladite base, par exemple un mélange comprenant entre 30 et 70 % en poids de la base et entre 70 et 30 % en poids de chlorhydrate.

Le procédé selon l'invention trouve une application intéressante dans le traitement des grains de bicarbonate de sodium obtenus par la technique aux amines décrite plus haut.

L'invention concerne dès lors aussi un procédé pour la production de bicarbonate de métal alcalin, selon lequel on traite du chlorure de métal alcalin, en présence d'eau, avec un gaz contenant de l'anhydride carbonique et une base organique azotée insoluble dans l'eau, on soumet le mélange réactionnel à une décantation pour recueillir, d'une part, une phase aqueuse comprenant une suspension aqueuse de bicarbonate de métal alcalin et, d'autre part, une phase organique comprenant du chlorhydrate de la base organique azotée, et on traite la phase aqueuse pour en extraire le bicarbonate de métal alcalin solide qu'elle contient et une eau mère; selon l'invention, le bicarbonate de métal alcalin solide est soumis à une turbulence dans un bain aqueux puis la suspension aqueuse résultante est soumise à une décantation comme exposé plus haut.

Des particularités et détails de l'invention vont ressortir de la description suivante des dessins annexés.

La figure 1 représente le schéma général d'une installation pour la production de bicarbonate de sodium mettant en oeuvre une forme d'exécution particulière du procédé selon l'invention.

Les figures 2, 3 et 4 représentent des formes de réalisation modifiées de l'installation de la figure 1.

Dans ces figures, des mêmes notations de référence désignent des éléments identiques.

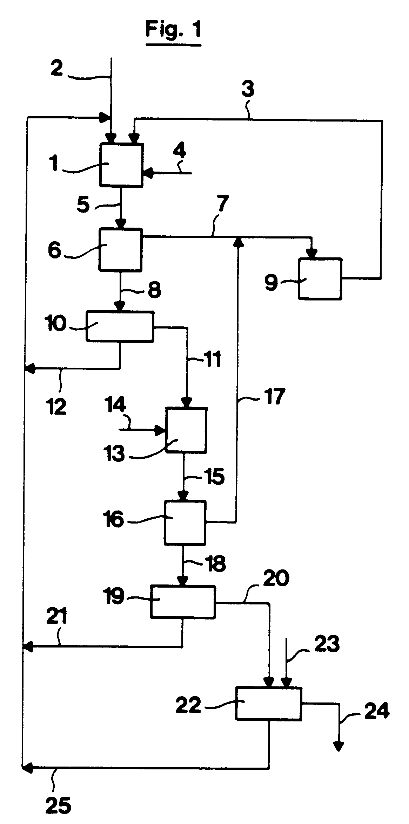

L'installation représentée à la figure 1 comprend une chambre de cristallisation 1 qui est alimentée, de manière continue, avec une solution aqueuse sensiblement saturée de chlorure de sodium ou un brouet aqueux de chlorure de sodium 2, un liquide organique 3 comprenant une amine primaire, insoluble dans la solution aqueuse de chlorure de sodium et un gaz contenant de l'anhydride carbonique 4. Le liquide organique 3 peut par exemple être une solution à 50 % en poids dans du xylène, de l'alkylamine primaire connue sous la marque PRIMENE JMT (Rohm & Haas) qui comprend entre 18 et 24 atomes de carbone dans sa molécule.

En variante, le liquide organique peut être une alkylamine primaire liquide contenant moins de 18 atomes de carbone dans sa molécule, utilisée telle quelle, non dissoute dans un solvant, par exemple l'amine connue sous la marque PRIMENE 81R (Rohm & Haas) dont la molécule contient entre 12 et 14 atomes de carbone.

Le gaz 4 est de préférence un gaz riche en anhydride carbonique, contenant au moins 60 % en poids d'anhydride carbonique.

Dans la chambre de cristallisation 1, du bicarbonate de sodium cristallise et l'amine est convertie en chlorhydrate d'amine.

On soutire de la chambre de cristallisation 1, un liquide 5 constitué d'un mélange de cristaux de bicarbonate de sodium, d'une eau mère de la cristallisation et d'une phase organique comprenant du chlorhydrate d'amine. Le liquide 5 est transféré dans une chambre de décantation 6, où on sépare, par gravité, d'une part la phase organique de chlorhydrate d'amine 7 et, d'autre part, une phase aqueuse 8 comprenant, pour l'essentiel, une suspension aqueuse de bicarbonate de sodium.

La phase organique de chlorhydrate d'amine 7 est traitée de manière connue en soi dans un dispositif 9 pour régénérer l'amine, qui est recyclée dans la chambre de cristallisation 1.

La phase aqueuse 8 est envoyée dans un dispositif d'essorage ou de filtration 10, d'où l'on extrait séparément du bicarbonate de sodium à l'état de grains 11 et une eau mère 12. Celle-ci est recyclée dans la chambre de cristallisation 1, après qu'on y ait ajouté du chlorure de sodium.

Conformément à l'invention, le bicarbonate de sodium solide 11 est introduit dans une chambre de malaxage 13 avec un bain aqueux 14 qui peut par exemple être de l'eau, une solution aqueuse de chlorure de sodium ou, plus avantageusement, une solution aqueuse de bicarbonate de sodium. Le mélange est soumis à une vive turbulence dans la chambre 13, par exemple au moyen d'une ou de plusieurs hélices. Le mélange résultant 15 est ensuite transféré dans une chambre de décantation 16 où s'opère, par décantation, la séparation d'une phase organique 17 que l'on recycle dans la phase organique 7 et d'une phase aqueuse 18 que l'on envoie dans un dispositif d'essorage ou de filtration 19. On recueille du dispositif 19, d'une part, des cristaux de bicarbonate de sodium 20 et, d'autre part, une eau mère 21 que l'on recycle dans la chambre de cristallisation 1.

Les cristaux de bicarbonate de sodium 20 sont transférés sur un filtre 22 où on les soumet à un courant d'eau de lavage 23.

Le bicarbonate de sodium 24 recueilli du filtre 22 peut être envoyé dans un four de calcination, non représenté, pour produire du carbonate de sodium anhydre.

L'eau recueillie du lavage 25 est envoyée dans la chambre de cristallisation 1.

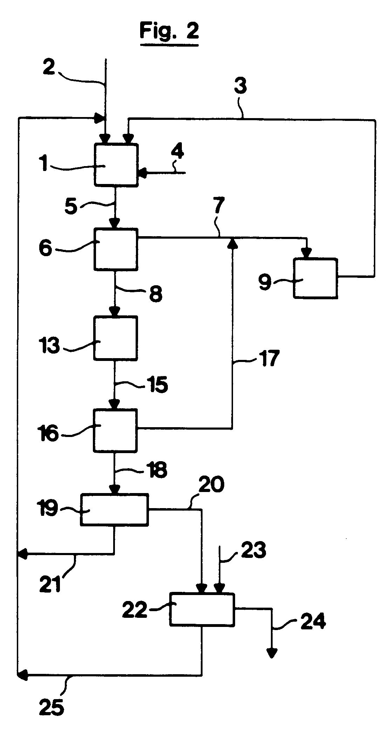

Dans une forme de réalisation modifiée du procédé, en référence à la figure 2, la phase aqueuse 8 séparée de la phase organique 7 est envoyée telle quelle, directement dans la chambre de malaxage 13 où on la soumet à une vive turbulence. Le mélange résultant 15 est ensuite traité de la manière décrite plus haut, en référence à la figure 1.

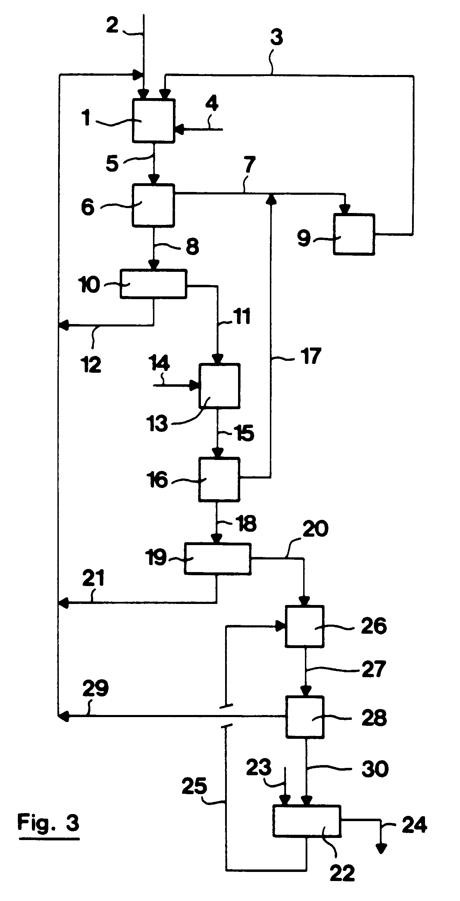

Dans la forme de réalisation représentée à la figure 3, les grains de bicarbonate de sodium 20 provenant de la chambre de décantation 19 sont transférés dans une seconde chambre de malaxage 26, où on introduit en outre le courant d'eau 25 provenant du filtre 22. Dans la chambre de malaxage 26, le bicarbonate de sodium et l'eau sont soumis à un brassage énergique et la suspension aqueuse résultante 27 est transférée dans une chambre de décantation 28, d'où on soutire séparément une solution aqueuse 29 que l'on envoie dans la chambre de cristallisation 1 et les grains de bicarbonate de sodium 30 que l'on envoie sur le filtre 22 où ils sont traités comme décrit plus haut en référence à la figure 1.

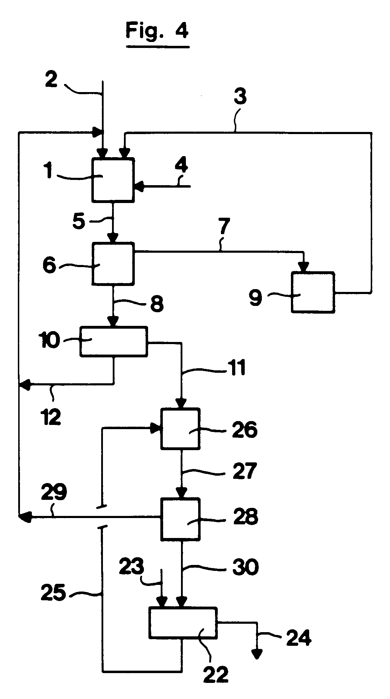

Dans une forme d'exécution simplifiée du procédé, représentée à la figure 4, les grains de bicarbonate de sodium 11 recueillis du dispositif d'essorage ou de filtration 10 à l'issue de la carbonatation sont introduits directement dans la chambre de malaxage 26 où ils sont ensuite traités comme décrit ci-dessus en référence à la figure 3.

L'exemple dont la description va suivre fait apparaître l'intérêt de l'invention.

On a fait réagir une solution aqueuse approximativement saturée de chlorure de sodium, une amine PRIMENE 81R (mélange d'amines contenant de 12 à 14 atomes de carbone dans la molécule) et de l'anhydride carbonique, on a filtré la suspension aqueuse résultante de bicarbonate de sodium et on a recueilli séparément le bicarbonate de sodium solide et l'eau mère. Le bicarbonate de sodium solide s'est révélé contenir, par kg, 2 g d'amine (à l'état d'un mélange d'amine et de chlorhydrate d'amine) et l'eau mère avait la composition pondérale suivante :

| NaCl | 132 g/kg |
|------|----------|
| $NaHCO_3$ | 37 g/kg |
| Amine | 1,4 g/kg. |

Conformément à l'invention, on a dispersé 1 kg du bicarbonate de sodium solide dans 4,25 kg de l'eau mère et on a soumis la dispersion résultante à une vive turbulence au moyen d'un agitateur à hélice, pendant 30 minutes. On a ensuite laissé le mélange décanter pendant 15 minutes pour séparer une phase organique contenant l'amine et une phase aqueuse. On a recueilli la phase aqueuse et on l'a filtrée pour en extraire le bicarbonate de sodium solide. Celui-ci a présenté une teneur résiduelle en amine de 0,35 g/kg.

**Revendications**

1. Procédé pour séparer des grains de bicarbonate de métal alcalin, d'une pellicule liquide de chlorhydrate d'une base organique azotée adsorbée à leur surface, caractérisé en ce qu'on disperse les grains (11, 20) dans un bain aqueux (14, 25) et on soumet la suspension aqueuse résultante (15, 27) successivement à une turbulence (13, 26) puis à une décantation (16, 28).

2. Procédé selon la revendication 1, caractérisé en ce que le bain aqueux (14) est une solution aqueuse saturée de bicarbonate de métal alcalin.

3. Procédé selon la revendication 1 ou 2, caractérisé en ce qu'on soumet les grains de bicarbonate de métal alcalin (20, 30) recueillis de la décantation (16, 28), à un lavage avec de l'eau (23).

4. Procédé selon l'une quelconque des revendications 1 à 3, caractérisé en ce que le chlorhydrate de la base organique azotée est du chlorhydrate d'amine.

5. Procédé selon la revendication 4, caractérisé en ce que le chlorhydrate de la base organique azotée est du chlorhydrate d'alkylamine primaire comprenant entre 12 et 24 atomes de carbone.

6. Procédé pour la production de bicarbonate de métal alcalin, selon lequel on traite du chlorure de métal alcalin (2), en présence d'eau, avec un gaz contenant de l'anhydride carbonique (4) et une base organique azotée insoluble dans l'eau (3), on soumet le mélange réactionnel à une décantation (6) pour recueillir, d'une part, une phase aqueuse (8) comprenant une suspension aqueuse de bicarbonate de métal alcalin et, d'autre part, une phase organique (7) comprenant du chlorhydrate de la base organique azotée, et on traite la phase aqueuse (8) pour en extraire le bicarbonate de métal alcalin solide qu'elle contient et une eau mère, caractérisé en ce qu'on soumet le bicarbonate de métal alcalin solide à un procédé conforme à l'une quelconque des revendications 1 à 5.

7. Procédé selon la revendication 6, caractérisé en ce que, pour extraire le bicarbonate de métal alcalin solide de la phase aqueuse (8), on soumet celle-ci successivement à une vive turbulence (13) et à une décantation (16).

8. Procédé selon la revendication 7, caractérisé en ce qu'avant de soumettre la phase aqueuse (8) à la turbulence (13), on évacue une fraction de l'eau mère.

9. Procédé selon la revendication 7 ou 8, caractérisé en ce qu'on recyle l'eau mère (21) dans le mélange réactionnel.

**Claims**

1. Process for separating alkali metal bicarbonate grains from a nitrogenous organic base hydrochloride liquid film adsorbed onto their surface, characterised in that the grains (11, 20) are dispersed in an aqueous bath (14, 25) and the resulting aqueous suspension (15, 27) is subjected successively to a stirring (13, 26) and then to a phase separation (16, 28).

2. Process according to Claim 1, characterised in that the aqueous bath (14) is a saturated aqueous solution of alkali metal bicarbonate.

3. Process according to Claim 1 or 2, characterised in that the alkali metal bicarbonate grains (20, 30) collected from the phase separation (16, 28) are subjected to a washing with water (23).

4. Process according to any one of Claims 1 to 3, characterised in that the nitrogenous organic base hydrochloride is an amine hydrochloride.

5. Process according to Claim 4, characterised in that the nitrogenous organic base hydrochloride is the hydrochloride of a primary alkylamine containing between 12 and 24 carbon atoms.

6. Process for the production of alkali metal bicarbonate, according to which alkali metal chloride (2) is treated, in the presence of water, with a gas containing carbon dioxide (4) and a water-insoluble

5

nitrogenous organic base (3), the reaction mixture is subjected to a phase separation (6) so as to collect, on the one hand, an aqueous phase (8) consisting of an aqueous suspension of alkali metal bicarbonate and, on the other hand, an organic phase (7) containing the nitrogenous organic base hydrochloride and the aqueous phase (8) is treated in order to extract therefrom the solid alkali metal bicarbonate it contains and a mother-liquor, characterised in that the solid alkali metal bicarbonate is subjected to a process according to any one of Claims 1 to 5.

7. Process according to Claim 6, characterised in that in order to extract the solid alkali metal bicarbonate from the aqueous phase (8), the latter is subjected successively to a vigorous stirring (13) and to a phase separation (16).

8. Process according to Claim 7, characterised in that before subjecting the aqueous phase (8) to stirring (13), a fraction of mother-liquor is evacuated.

9. Process according to Claim 7 or 8, characterised in that the mother-liquor (21) is recycled into the reaction mixture.

**Patentansprüche**

1. Verfahren zum Trennen von Alkalimetallbicarbonat-Körnchen von einer an ihrer Oberfläche adsorbierten flüssigen Schicht von Chlorhydrat einer stickstoffhaltigen organischen Base, dadurch gekennzeichnet, daß man die Körnchen (11, 20) in einem wässrigen Bad (14, 25) dispergiert und die daraus resultierende wässrige Suspension (15, 27) nacheinander einer Durchwirbelung (13, 26), dann einer Dekantierung (16, 28) unterzieht.

2. Verfahren nach Anspruch 1, dadurch gekennzeichnet, daß das wässrige Bad (14) eine gesättigte wässrige Lösung von Alkalimetallbicarbonat ist.

3. Verfahren nach Anspruch 1 oder 2, dadurch gekennzeichnet, daß man die bei der Dekantierung (16, 28) erhaltenen Alkalimetallbicarbonat-Körnchen (20, 30) einer Waschung mit Wasser (23) unterzieht.

4. Verfahren nach einem der Ansprüche 1 bis 3, dadurch gekennzeichnet, daß das Chlorhydrat der stickstoffhaltigen organischen Base Amin-Chlorhydrat ist.

5. Verfahren nach Anspruch 4, dadurch gekennzeichnet, daß das Chlorhydrat der stickstoffhaltigen organischen Base Chlorhydrat von primärem Alkylamin ist, das zwischen 12 und 24 Kohlenstoffatome umfaßt.

6. Verfahren zur Herstellung von Alkalimetallbicarbonat, gemäß dem man Alkalimetallchlorid (2) in Anwesenheit von Wasser mit einem Kohlensäureanhydrid (4) enthaltenden Gas und einer in Wasser unlöslichen, stickstoffhaltigen organischen Base (3) behandelt, die Reaktionsmischung einer Dekantierung (6) unterzieht, um einerseits eine wässrige Phase (8), die eine wässrige Alkalimetallbicarbonat-Suspension umfaßt, und andererseits eine organische Phase (7), die das Chlorhydrat der stickstoffhaltigen organischen Base umfaßt, zu erhalten und man die wässrige Phase (8) behandelt, um daraus das feste Alkalimetallbicarbonat, das diese enthält, und eine Mutterlauge zu extrahieren, dadurch gekennzeichnet, daß man das feste Alkalimetallbicarbonat einem Verfahren gemäß einem der Ansprüche 1 bis 5 unterzieht.

7. Verfahren nach Anspruch 6, dadurch gekennzeichnet, daß man, um das feste Alkalimetallbicarbonat aus der wässrigen Phase (8) zu extrahieren, diese nacheinander einer heftigen Durchwirbelung (13) und einer Dekantierung (16) unterzieht.

8. Verfahren nach Anspruch 7, dadurch gekennzeichnet, daß bevor die wässrige Phase (8) der Durchwirbelung (13) unterzogen wird, man einen Teil der Mutterlauge evakuiert.

9. Verfahren nach Anspruch 7 oder 8, dadurch gekennzeichnet, daß man die Mutterlauge (21) in die Reaktionsmischung zurückführt.

Fig. 1

Fig. 2

**Fig. 3**

## Fig. 4